# EUROPEAN PATENT APPLICATION

(11) **EP 4 703 905 A1**
(43) Date of publication of application: **04.03.2026**
(21) Application number: 24751360.9
(22) Date of filing: 27.03.2024
(51) Int. Cl.: G06F 16/332

(54) **QUESTION ANSWERING METHOD AND APPARATUS, AND COMPUTER DEVICE AND STORAGE MEDIUM**

(30) Priority: 27.04.2023 CN 202310476944
(71) Applicant: Beijing Zitiao Network Technology Co., Ltd., Beijing 100190 (CN)
(72) Inventor: TAN, Aonan, Chaoyang District Beijing 100028 (CN); LI, Jun, Chaoyang District Beijing 100028 (CN); PAN, Rendan, Chaoyang District Beijing 100028 (CN); QIN, Zhenzhen, Chaoyang District Beijing 100028 (CN)
(74) Representative: Marks & Clerk LLP
(86) International application number: PCT/CN2024/083963
(87) International publication number: WO 2024/222353

(57) **Abstract**

The present disclosure provides a question-and-answer method and apparatus, a computer device, and a storage medium, and the method includes: in response to initiating a question by a user, determining a target scenario of the question from the user; displaying questioning auxiliary information matched with the target scenario; an information format of the questioning auxiliary information and/or completeness of the questioning auxiliary information being related to a scenario type of the target scenario, and the questioning auxiliary information being configured to assist the user to edit target question information for questioning; and in response to receiving edited target question information for the questioning auxiliary information, displaying an artificial intelligence answer result matched with the target question information.

## Description

The present application claims the priority and benefits of Chinese patent application No. 202310476944.5 filed on April 27, 2023, the entire disclosure of which is incorporated herein by reference as a part of the present application.

### TECHNICAL FIELD

The present disclosure relates to a question-and-answer method, a question-and-answer apparatus, a computer device and a storage medium.

### BACKGROUND

The use of artificial intelligent (AI) technology can solve the related search problems for users, and users can get answers to the questions by inputting information on an AI question and answer page. The answers provided by AI may be affected by the completeness of the content in the questioning information. If the inputted questioning information is incomplete or not comprehensive, AI may not be able to give accurate answers that meet the needs of the users.

For users, it is difficult to directly sort out the complete questioning information. In this case, AI cannot accurately identify the user's questioning intention from the questioning information. As a result, the answers provided to the users cannot meet the actual needs of the users.

### SUMMARY

Embodiments of the present disclosure at least provide a question-and-answer method, a question-and-answer apparatus, a computer device and a storage medium.

The embodiment of the disclosure provides a question-and-answer method, which includes the following steps: in response to initiating a question by a user, determining a target scenario for the question from the user; displaying questioning auxiliary information matched with the target scenario, wherein an information format of the questioning auxiliary information and/or completeness of the questioning auxiliary information is related to a scenario type of the target scenario, and the questioning auxiliary information is configured to assist the user to edit target question information for questioning; and in response to receiving edited target question information for the questioning auxiliary information, displaying an artificial intelligence answer result matched with the target question information.

In an optional embodiment, the in response to initiating a question by a user, determining a target scenario for the question from the user includes: displaying a plurality of candidate scenarios on an artificial intelligence answer page, and determining the target scenario for the question from the user in response to a selection operation for the candidate scenarios by the user; or receiving at least part of question information inputted by the user in a question input area of the artificial intelligence answer page, and determining the target scenario matched with the at least part of question information.

In an optional embodiment, the questioning auxiliary information matched with the target scenario is determined by: determining a target auxiliary information type from a plurality of auxiliary information types based on the scenario type of the target scenario, wherein information formats corresponding to different auxiliary information types and/or information completeness corresponding to the different auxiliary information types are different; and generating the questioning auxiliary information matched with the target scenario according to the target auxiliary information type.

In an optional embodiment, the determining a target auxiliary information type from a plurality of auxiliary information types based on the scenario type of the target scenario includes: in response to the target scenario belonging to a first scenario type, determining that the target auxiliary information type includes a complete question information type, wherein the first scenario type includes a scenario type that does not need to be supplemented with personalized information; and the generating the questioning auxiliary information matched with the target scenario according to the target auxiliary information includes: based on scenario information of the target scenario, generating editable complete question information matched with the target scenario to be used as the questioning auxiliary information.

In an optional embodiment, the determining a target auxiliary information type from a plurality of auxiliary information types based on the scenario type of the target scenario includes: in response to the target scenario belonging to a second scenario type, determining that the target auxiliary information type includes a fill-in-the-blank question information type, wherein the second scenario type includes a work-learning scenario; and he generating the questioning auxiliary information matched with the target scenario according to the target auxiliary information includes: generating at least one statement to be filled that matches the target scenario according to the fill-in-the-blank question information type, wherein the statement to be filled includes a piece of first field information to be filled, the first field information to be filled is configured to indicate to supplement blank content in the statement to be filled, and the target question information is generated after supplementing the blank content in the statement to be filled.

In an optional embodiment, the determining a target auxiliary information type from a plurality of auxiliary information types based on the scenario type of the target scenario: in response to the target scenario belonging to a third scenario type, determining that the target auxiliary information type includes a form-based question information type, wherein the third scenario type includes a document scenario; and the generating the questioning auxiliary information matched with the target scenario according to the target auxiliary information includes: generating a form matched with the target scenario according to the form-based question information type, wherein the form includes a plurality of pieces of second field information to be filled, the second field information to be filled is configured to indicate a selection or input of field information for a specified field, and filled form information is configured to generate the target question information in a preset format.

In an optional embodiment, the displaying questioning auxiliary information matched with the target scenario includes: displaying a plurality of question dimensions corresponding to the target scenario, and displaying matched field information to be filled under the question dimensions.

In an optional embodiment, the determining a target auxiliary information type from a plurality of auxiliary information types based on the scenario type of the target scenario includes: in response to the target scenario belonging to a fourth scenario type, determining that the target auxiliary information type includes a predicative question information type, wherein the fourth scenario type includes a scenario in which a user actively inputs part of question information; and the generating the questioning auxiliary information matched with the target scenario according to the target auxiliary information includes: performing intention recognition on the part of question information, and generating a plurality of pieces of predicated candidate question information, wherein selected question information in the candidate question information is used as the questioning auxiliary information.

In an optional embodiment, the plurality of pieces of predicated candidate question information are generated by: acquiring historical search data associated with the part of question information; performing search-link clustering on the historical search data to determine the historical search data corresponding to a same search-link, wherein the search-link includes a plurality of continuous search records, and the plurality of continuous search records include: continuous supplementary search after initiating an initial search; and generating the candidate question information corresponding to the search-link based on each historical search data of each search-link.

The embodiment of the disclosure also provides a question-and-answer apparatus, which includes: a determining module, configured to determine a target scenario for a question from a user in response to initiating the question by the user; a first display module, configured to display questioning auxiliary information matched with the target scenario, wherein an information format of the questioning auxiliary information and/or completeness of the questioning auxiliary information is related to a scenario type of the target scenario, and the questioning auxiliary information is configured to assist the user to edit target question information for questioning; and a second display module, configured to display an artificial intelligence answer result matched with the target question information in response to receiving edited target question information for the questioning auxiliary information.

In an optional embodiment, when determining a target scenario for the question from the user in response to initiating a question by a user, the determining module is configured to: display a plurality of candidate scenarios on an artificial intelligence answer page, and determine the target scenario for the question from the user in response to a selection operation for the candidate scenarios by the user; or receive at least part of question information inputted by the user in a question input area of the artificial intelligence answer page, and determine the target scenario matched with the at least part of question information.

In an optional embodiment, the apparatus further includes a processing module, the questioning auxiliary information matched with the target scenario is determined by the processing module according to the following way: determining a target auxiliary information type from a plurality of auxiliary information types based on the scenario type of the target scenario, wherein information formats corresponding to different auxiliary information types and/or information completeness corresponding to the different auxiliary information types are different; and generating the questioning auxiliary information matched with the target scenario according to the target auxiliary information type.

In an optional embodiment, when determining the target auxiliary information type from the plurality of auxiliary information types based on the scenario type of the target scenario, the processing module is configured to: determine that the target auxiliary information type includes a complete question information type in response to the target scenario belonging to a first scenario type, wherein the first scenario type includes a scenario type that does not need to be supplemented with personalized information. When generating the questioning auxiliary information matched with the target scenario according to the target auxiliary information, the processing module is configured to: generate editable complete question information matched with the target scenario to be used as the questioning auxiliary information based on scenario information of the target scenario.

In an optional embodiment, the determining a target auxiliary information type from a plurality of auxiliary information types by the processing module based on the scenario type of the target scenario includes: in response to the target scenario belonging to a second scenario type, determining that the target auxiliary information type includes a fill-in-the-blank question information type, wherein the second scenario type includes a work-learning scenario. When generating the questioning auxiliary information matched with the target scenario according to the target auxiliary information, the processing module is configured to: generate at least one statement to be filled that matches the target scenario according to the fill-in-the-blank question information type, wherein the statement to be filled includes a piece of first field information to be filled, the first field information to be filled is configured to indicate to supplement blank content in the statement to be filled, and the target question information is generated after supplementing the blank content in the statement to be filled.

In an optional embodiment, when determining the target auxiliary information type from the plurality of auxiliary information types based on the scenario type of the target scenario, the processing module is configured to: in response to the target scenario belonging to a third scenario type, determine that the target auxiliary information type includes a form-based question information type, wherein the third scenario type includes a document scenario. When generating the questioning auxiliary information matched with the target scenario according to the target auxiliary information, the processing module is configured to: generate a form matched with the target scenario according to the form-based question information type, wherein the form includes a plurality of pieces of second field information to be filled, the second field information to be filled is configured to indicate a selection or input of field information for a specified field, and filled form information is configured to generate the target question information in a preset format.

In a possible embodiment, when displaying questioning auxiliary information matched with the target scenario, the first display module is configured to: display a plurality of question dimensions corresponding to the target scenario, and displaying matched field information to be filled under the question dimensions.

In an optional embodiment, when determining the target auxiliary information type from the plurality of auxiliary information types based on the scenario type of the target scenario, the processing module is configured to: in response to the target scenario belonging to a fourth scenario type, determine that the target auxiliary information type includes a predicative question information type, wherein the fourth scenario type includes a scenario in which a user actively inputs part of question information. When generating the questioning auxiliary information matched with the target scenario according to the target auxiliary information, the processing module is configured to: perform intention recognition on the part of question information, and generate a plurality of pieces of predicated candidate question information, wherein selected question information in the candidate question information is used as the questioning auxiliary information.

In an optional embodiment, the plurality of pieces of predicated candidate question information are generated by: acquiring historical search data associated with the part of question information; performing search-link clustering on the historical search data to determine the historical search data corresponding to a same search-link, wherein the search-link includes a plurality of continuous search records, and the plurality of continuous search records include: continuous supplementary search after initiating an initial search; and generating the candidate question information corresponding to the search-link based on each historical search data of each search-link.

An optional implementation of the present disclosure also provides a computer device, which includes: a processor and a memory; the memory stores a machine-readable instruction executable by the processor, the processor is configured to execute the machine-readable instruction stored in the memory, and when the machine-readable instruction is executed by the processor, the steps in the above embodiment or any possible implementation of the above embodiments are executed by the processor.

An optional implementation of the present disclosure also provides a computer-readable storage medium storing a computer program; the computer program, when executed, performs the steps in the above-mentioned embodiment or any possible implementation of the above-mentioned embodiment.

In order to make the above objectives, features and advantages of the present disclosure more obvious and easier to understand, the following provides a detailed description through preferred embodiments with the attached drawings.

### BRIEF DESCRIPTION OF DRAWINGS

In order to explain the technical solutions of the embodiments of the present disclosure more clearly, the accompanying drawings used by the embodiments are briefly described below. The drawings described herein are integrated into and constitute a part of the description. These drawings show some embodiments in accordance with the present disclosure, and are used to describe the technical solutions of the present disclosure together with the description. It should be understood that the following drawings only show some embodiments of the present disclosure and should not be regarded as limiting the scope thereof, and that a person of ordinary skill in the art may obtain other relevant drawings from those drawings without creative effort.
Fig. 1 shows a flow chart of a question-and-answer method provided by an embodiment of the present disclosure;
Fig. 2 is a schematic diagram of an AI answer page provided by an embodiment of the present disclosure;
Fig. 3 shows a schematic diagram of displaying questioning auxiliary information in a first scenario type provided by an embodiment of the present disclosure;
Fig. 4 shows a schematic diagram of displaying questioning auxiliary information in a second scenario type provided by an embodiment of the present disclosure;
Fig. 5 shows a schematic diagram of displaying questioning auxiliary information in a third scenario type provided by an embodiment of the present disclosure;
Fig. 6 shows a schematic diagram of displaying questioning auxiliary information in a fourth scenario type provided by an embodiment of the present disclosure;
Fig. 7 shows a schematic diagram of a question-and-answer apparatus provided by an embodiment of the present disclosure; and
Fig. 8 is a schematic diagram of a computer device provided by an embodiment of the present disclosure.

### DETAILED DESCRIPTION

In order to make the objectives, technical solutions, and advantages of the embodiments of the present disclosure clearer, the technical solutions in the embodiments of the present disclosure are described clearly and completely below with reference to the accompanying drawings in the embodiments of the present disclosure. It is apparent that the described embodiments are not exhaustive, but merely part of the embodiments of the present disclosure. Generally, the components of the embodiments of the present disclosure described and shown herein may be arranged and designed in a variety of different configurations. Therefore, the following detailed description of the embodiments of the present disclosure is not intended to limit the scope of the claimed disclosure, but merely represents selected embodiments of the present disclosure. Based on the embodiments of the present disclosure, all other embodiments obtained by those skilled in the art without creative work shall fall within the protection scope of the present disclosure.

It is found that if users want to expect an AI model to provide answers that meet their actual needs, they need to sort out relatively complete question information according to their own needs. However, in general, it is difficult for users to sort out complete and comprehensive questioning information, such as searching only by a few keywords. In this case, because the question information provided by the users is not complete enough, the AI model cannot accurately identify the questioning intention of the user, and thus the answer provided to the user cannot meet the actual needs of the user.

Based on the above research, the embodiments of the present disclosure provide a question-and-answer method, which can display questioning auxiliary information matched with a target scenario to a user according to the target scenario of a question initiated by the user. Here, according to different scenario types, information format of the questioning auxiliary information and/or information completeness of the questioning auxiliary information are different, so that the questioning auxiliary information may be provided in different information formats and/or with completeness according to the requirements of the scenario types, so as to better assist the users to edit target question information for questioning. In this way, when a user has the need to ask questions to an AI model, questioning auxiliary information matched with the needs of a current scenario may be displayed to the user, so as to help the user quickly sort out the target question information that meets the needs of the user, and the AI model can give an answer result that can better meet the needs the user based on a relatively perfect target question information.

The proposed and solved ideas of the above problems are the results obtained by the inventor after practice and careful study. Therefore, the discovery process of the above problems and the solutions to the above problems proposed below in the present disclosure should be deemed as the contribution of the inventor to the present disclosure in the course of the present disclosure.

It should be noted that similar numerals and letters in the drawings below indicate similar items. Therefore, once an item is defined in a drawing, it does not need to be further defined and explained in subsequent drawings.

In order to facilitate the understanding of this embodiment, firstly, a question-and-answer method disclosed in the embodiments of the present disclosure is described in detail. The execution subject of the question-and-answer method provided in the embodiments of the present disclosure is generally a computer device with certain computing capabilities, and the computer device includes, for example, a terminal device or a server or another processing device, and the terminal device may be a user equipment (UE), a mobile device, a user terminal, a terminal, a cellular phone, a cordless telephone, a personal digital assistant (PDA), a handheld device, a computing device, a vehicle-mounted device, a wearable device, or the like. In some possible implementations, the question-and-answer method may be implemented by a processor calling computer-readable instructions stored in a memory.

The question-and-answer method provided in the embodiments of the present disclosure is described below. The question-and-answer method provided in the embodiments of the present disclosure may be specifically applied to a search platform or separately applied to an artificial intelligence (AI) platform. In the platform, in addition to querying existing searchable information, the platform can also create information that meets the needs of users according to the target question information edited by the users, such as writing articles, planning schedules, checking whether articles have grammatical errors or not, making resumes and documents, or the like.

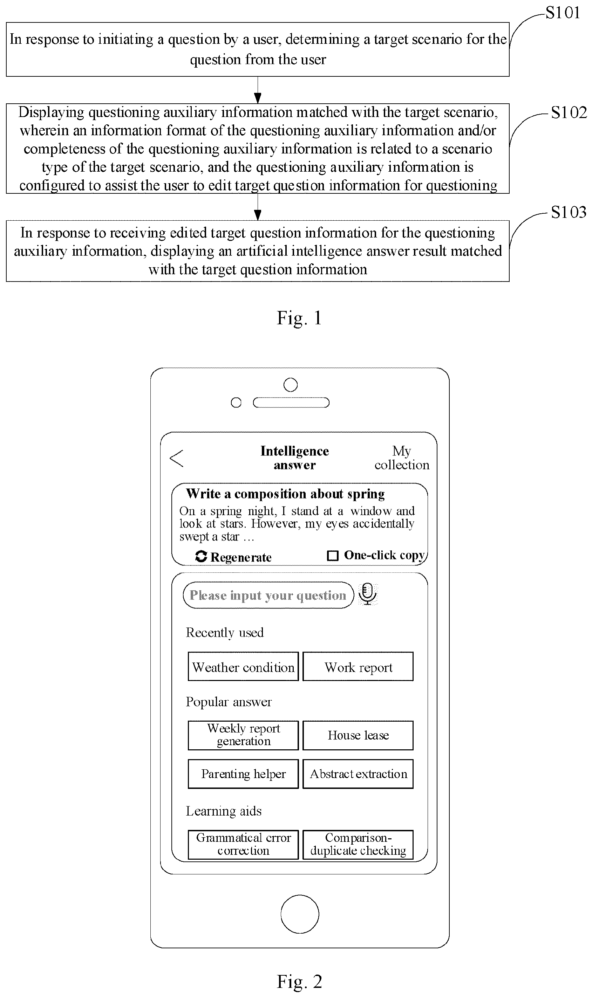

Referring Fig.1, a question-and-answer method provided for an embodiment of the present disclosure is shown. The method includes steps S101 to S103, including:
S101: in response to initiating a question by a user, determining a target scenario for the question from the user.
S102: displaying questioning auxiliary information matched with the target scenario, wherein an information format of the questioning auxiliary information and/or completeness of the questioning auxiliary information is related to a scenario type of the target scenario, and the questioning auxiliary information is configured to assist the user to edit target question information for questioning.
S103: in response to receiving edited target question information for the questioning auxiliary information, displaying an artificial intelligence answer result matched with the target question information.

For the foregoing S101, when a user needs to ask a question, the user can obtain an answer result by asking the question through the platform described above. The specific search requirements may be determined according to the actual needs of the user. For example, for an engineer user A, the actual need may be to get project proposal documents of a project "environmental protection and energy-saving components" by asking questions. Alternatively, for a job seeker B, the actual need may be to generate a resume for a selected job. Alternatively, for a user C who plans to travel, the actual need may be to get a travel guide for a certain area, or the like.

In order to provide these users with answers that meet their questioning needs, the platform may provide a user with an artificial intelligence (AI) answer page, so that the user can initiate a question through relevant operations on an AI answer page after entering the AI answer page provided by the platform. Referring to Fig. 2, a schematic diagram of an AI answer page provided by an embodiment of the present disclosure is shown.

In the AI answer page shown in Fig. 2, exemplarily, an input box for inputting question information is provided in the middle area of Fig.2, the user is prompted to type a specific question here by "Please input your question". A voice input function is also provided and functions such as photo query may also be provided, so as to enable the user to choose an appropriate way to input a question.

In an upper area of Fig. 2, the latest question and answer results are shown, such as the question "Write a composition about spring" shown in the figure and the sample composition below. If this is the first time for the user to use it, and there is no historical questioning behavior, other examples may also be shown here to enable the user to understand how to get an answer result by the way of asking a question.

In a lower area of Fig. 2, taking a plurality of buttons as an example, specific question-and-answer functions that can be provided are prompted to users through text annotations on the buttons, so as to assist the users to understand what the specific question-and-answer services can be provided under the platform. For example, for the "Weather condition " shown in the figure, the users can easily know that they can check the weather condition after selection, or for the "Weekly report generation" shown in the figure, the users can easily know that it can be used to organize a study, work weekly report, or the like. When arranging these buttons corresponding to different functions, the buttons selected by the users in history can be displayed first, and the buttons corresponding to popular functions and functions of different categories such as learning aids, work assistants, and encyclopedia sorting, can be displayed in categories.

In other words, when users ask questions through the AI answer page, they can select a button provided in the AI answer page to realize questioning under the corresponding functions, or they can actively organize the question information and issue questions.

Therefore, in the embodiments of the present disclosure, the in response to initiating a question by a user, determining a target scenario for the question from the user may be in the following way: displaying a plurality of candidate scenarios on an artificial intelligence answer page, and determining the target scenario for the question from the user in response to a selection operation for the candidate scenarios by the user; or, receiving at least part of question information inputted by the user in a question input area of the artificial intelligence answer page, and determining the target scenario matched with the at least part of question information.

It is described in detail below. Firstly, the user can ask a question through a button provided in the AI answer page. In this case, the user is specifically instructed to select a scenario from the existing candidate scenarios. For example, multiple candidate scenarios are pre-displayed in the AI answer page, and each candidate scenario corresponds to a specific function. For example, for the "Weather condition" shown in the above example, the specific function is to view the weather, and the target scenario for the user to ask question is a questioning scenario about the weather condition.

Secondly, a user may input a specific question in a question input area of the AI answer page, that is, after the user inputs the question, the target scenario is determined by analyzing the question inputted by the user. For example, when the question information inputted by the user includes "Find possible semantic errors in the following: XX", the target scenario determined by the user when asking the question can be determined through keywords (such as "find" and "semantic errors"), such as the target scenario of the specific query syntax errors here.

In this way, in the embodiments of the present disclosure, when determining the target scenario for the question from the user, in response to the user specifically selecting from a plurality of candidate scenarios, the target scenario for the question from the user is determined according to the selected candidate scenario. Alternatively, when the user asks a question by inputting at least part of question information, it is necessary to analyze the question information and then determine the target scenario.

For the above S102, after determining the target scenario for the question from the user, in order to help the user write target question information with complete and comprehensive expression, so as to obtain an AI answer result that better meets the user's questioning intention. In the embodiments of the present disclosure, specifically, according to the scenario type of the target scenario determined in the above steps, questioning auxiliary information matched with the target scenario is displayed to the user.

Here, when the user is assisted to edit the target question information through the questioning auxiliary information, in one possible case, only simple text, such as just one example, may be provided. For example, when it is necessary to sort out the data in order to obtain summary data, a text message "I hope you can sort out the data as a historian, specifically sort out the development and changes of cultural, economic and social events in history, so as to sort out the summary data of historical research" may be displayed. It is known that there may actually be many academic fields when sorting out data to obtain summary data, but it is not possible to show users all possible situations in each academic field, so it is common to show users specific examples when asking questions through one of the situations listed above.

However, in this case, the specific examples shown to users may not be transferable. For example, when a user also needs to sort out the data to obtain the summary data, if a document that the user needs to sort out is about content of engineering disciplines such as electricity and engineering mechanics, the focus may be on the iteration of technology. Therefore, after referring to the "development and change of cultural, economic, and social events" described in the above example, the user may not be able to get appropriate questioning information through simple text replacement. Therefore, in some cases, the above-mentioned way of explicitly citing specific examples may not assist the user to edit the target question information that meets their own questioning needs, because the examples provided are too relevant to a specific and underlying problem, which make them not universal.

In addition, in this way, even if a user wants to replace part of the content in an example to obtain the target question information that meet the needs thereof, the user also needs to perform the copy and paste operations, which means that the user needs to copy and paste the content into the question input area of the AI answer page, then delete it by selecting the words that need to be replaced, and then type in the information that meets its own questioning needs to ask questions, which is not convenient for the user.

Therefore, in the embodiments of the present disclosure, the questioning auxiliary information matched with the target scenario is specifically determined according to the following way: determining a target auxiliary information type from a plurality of auxiliary information types based on the scenario type of the target scenario, wherein information formats corresponding to different auxiliary information types and/or information completeness corresponding to the different auxiliary information types are different; and generating the questioning auxiliary information matched with the target scenario according to the target auxiliary information type.

Specifically, in different scenarios, the questioning auxiliary information provided to users is different. For example, for a scenario of making a legal document, the questioning auxiliary information provided may be an official document format, such as a contract format, and fixed standard clauses are displayed, while information that needs to be filled in by the user is left blank. For a scenario of asking about the weather, as scope of questioning is already limited to some extent, a number of exact questions may be provided, such as "The temperature and humidity of today's weather, and the intensity of ultraviolet rays" and "The temperature changes today", and so on.

In other words, for different scenario types of different target scenarios, the specific questioning auxiliary information that may be provided is different. This difference is not only reflected in the difference of expression of information such as the text, but also in the difference of information format and/or information completeness. In addition, a variety of auxiliary information types may be predetermined before providing users with questioning auxiliary information, for example, in the above example, a fill-in-the-blank question type such as a contract template or pleading template used to generate documents, or a complete question information type for various possible questions about weather. After determining the scenario type of the target scenario, the target auxiliary information type may be matched from a variety of auxiliary information types, and the questioning auxiliary information matched with the target scenario may be generated accordingly.

Examples of scenario types under various scenario are given in the following to illustrate how to determine the target auxiliary information type according to the scenario type, and generate the questioning auxiliary information matched with the target scenario accordingly.
(1) The target scenario belongs to a first scenario type. The first scenario type includes a scenario type that does not need to be supplemental with personalized information.

Exemplarily, for questioning about weather conditions described above, since the specific scope of the question is determined, this scenario belongs to a type that does not need to be supplemental with personalized information. In addition to the weather conditions described above, the first scenario type may include, for example, a scenario type that asks questions about a school for further education, an employment, or the like.

In this scenario, it can be determined that the target auxiliary information type includes the complete question information type. This complete question information type is characterized by definite and complete questioning information.

Accordingly, the generating the questioning auxiliary information matched with the target scenario according to the target auxiliary information may be in the following way: based on scenario information of the target scenario, generating editable complete question information matched with the target scenario to be used as the questioning auxiliary information.

For example, for a scenario described above to ask questions about weather conditions, the complete question information that can be provided can specifically include "Hourly temperature changes today", "Ultraviolet indicators today", "Local weather changes in the past seven days", and so on. Since the scope of questioning that can be asked is expressly limited by "weather conditions", when the questioning auxiliary information is provided, users may be directly provided with a variety of possible complete question information within this range, so that users can directly select appropriate complete question information according to their questioning intention. In addition, such complete question information provided may also be editable, and users can also directly edit the text on this provided information to obtain the target question information for asking questions.

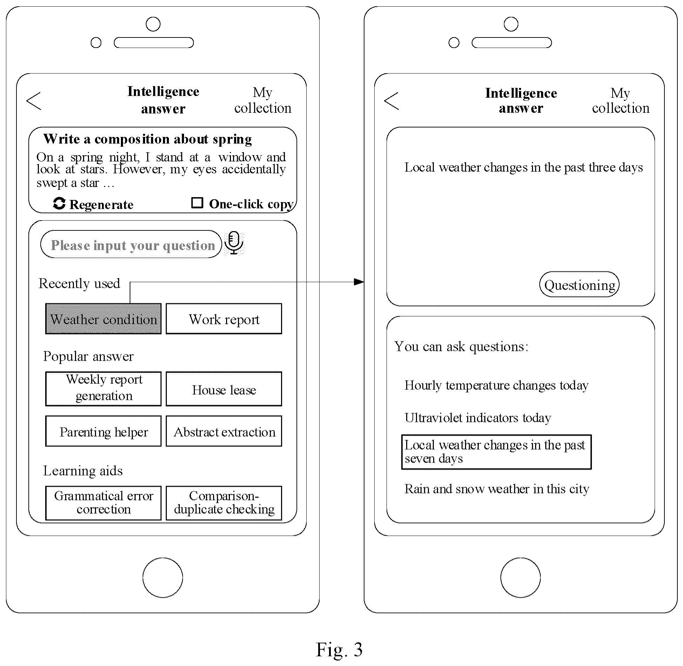

Exemplarily, as shown in Fig. 3, a schematic diagram of displaying questioning auxiliary information in a first scenario type provided by an embodiment of the present disclosure is shown. In this schematic diagram, in response to a trigger operation of "Weather conditions" in (a) of Fig. 3, for example, a page shown in (b)of Fig. 3 may be displayed. In the page in (a) of Fig. 3, a plurality of pieces of editable complete question information are displayed, and in response to the triggering operation of any complete question information, the complete question information may be displayed in the question input area. For example, when "Local weather changes in the past 7 days" is selected, the question information is displayed in the question input area, and the box is changed to the selected status accordingly.

After the question information is displayed in the question input area, the user can also edit it through the edit operation. For example, in the question input area shown in (b) of Fig. 3, the user may change the selected "Local weather changes in the past seven days" to "Local weather changes in the past three days" to use it as the target question information.

(2) The target scenario belongs to a second scenario type. The second scenario type includes a work-learning scenario.

Exemplarily, for the needs of organizing work items, when organize work content under a work category, there are fixed requirements of the nature of work, such as the corresponding specific requirements for reporting formats of a work report of people in different positions, but the scope of report content is also selected, such as various project content referenced by different R&D departments when reporting.

Therefore, in this scenario, it can be determined that the target auxiliary type includes a fill-in-the-blank question information type. In this regard, the specific requirements for the reporting format described above may be used to determine segments that contain a filling position, and the selectable project content may be used as the information to be filled into the segments.

In this way, the generating the questioning auxiliary information matched with the target scenario according to the target auxiliary information may be in the following way: generating at least one statement to be filled that matches the target scenario according to the fill-in-the-blank question information type, wherein the statement to be filled includes a piece of first field information to be filled, the first field information to be filled is configured to indicate to supplement blank content in the statement to be filled, and the target question information is generated after supplementing the blank content in the statement to be filled.

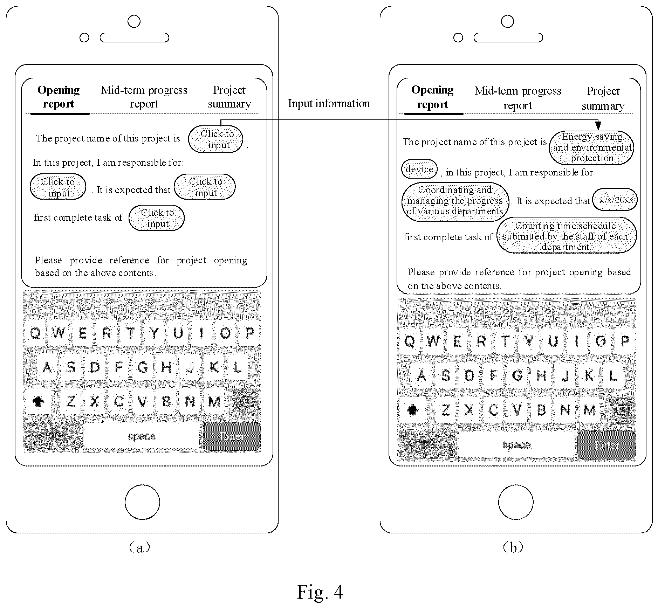

In this regard, the scenario corresponding to work reporting described above is taken as an example. As shown in Fig. 4, a schematic diagram of displaying questioning auxiliary information in a second scenario type provided by an embodiment of the present disclosure is shown. In (a) of Fig. 4, multiple problem dimensions that can be selected for the work report are first displayed through multiple labels, including "Opening report", "Mid-term progress report" and "Project summary". Taking the "Opening report" as an example, specifically, the statement to be filled as shown in (a) of Fig. 4 can be generated. The statements to be filled, such as "The project name of this project is" and "I am responsible for", contain a plurality of pieces of information to be filled. For example, a specific project name, such as "Energy saving and environmental protection device", may be filled in after "The project name of this project is", and a specific work that the user is responsible for in this project, such as "Coordinating and managing the progress of various departments", may be filled in after "I am responsible for".

The first field information to be filled in the embodiment of the present disclosure is used to indicate to supplement blank content in the statement to be filled. For example, the first field information to be filled in the above (a) of Fig. 4 includes "Project name", "Task content", or the like. Once the blank content in the statement to be filled is supplemented, the target question information can be generated. In the specific display, the fixed text determined in the statement to be filled is displayed directly, and the blank content is displayed in the form of a text box, and the user is prompted to supplement the text box through the text logo "Click to input". Specifically, referring to the example diagram shown in (b) of Fig. 4, after filling in the specific project name: "Energy saving and environmental protection device" and work content: "Coordinating and managing the progress of various departments" and other information, that is, after supplementing the blank content, the complete target question information may be generated.

(3) The target scenario belongs to a third scenario type. The third scenario type includes a document scenario.

Exemplarily, for the needs to prepare contracts and pleadings, legal documents are specifically involved. In legal documents, there is usually information about both parties, causes, and other fixed standard clauses that need to be written according to an actual situation. Therefore, when the user is assisted in preparing a legal document, the user may be prompted to input the information required according to the actual situation, such as agreed matters and causes of action, to generate the legal document required by the user.

Specifically, since the information items that need to be inputted by the user in a legal document are usually normalized, and there may be a larger number of categories that need to be inputted, users can be provided with a form to fill in the information in an orderly manner. In this scenario type, it can be determined that the target auxiliary information type includes the form-based question information type.

In a specific embodiment, the generating the questioning auxiliary information matched with the target scenario according to the target auxiliary information may be in the following way: generating a form matched with the target scenario according to the form-based question information type, wherein the form includes a plurality of pieces of second field information to be filled, the second field information to be filled is configured to indicate a selection or input of field information for a specified field, and filled form information is configured to generate the target question information in a preset format.

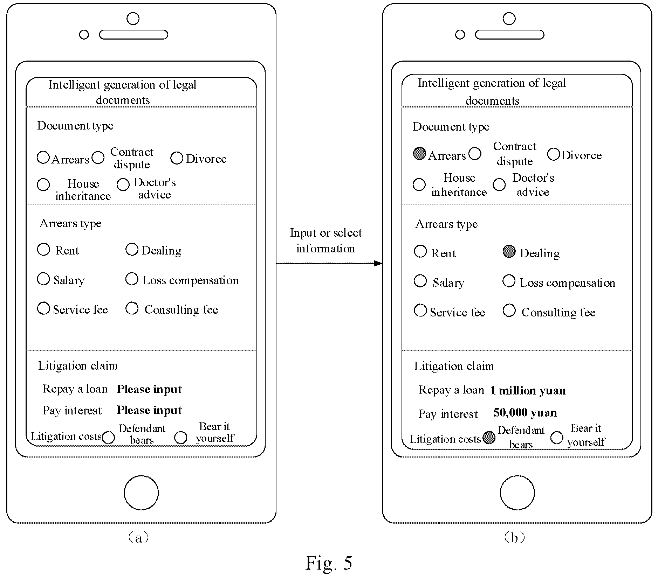

Exemplarily, as shown in Fig. 5, a schematic diagram of displaying questioning auxiliary information in a third scenario type provided by an embodiment of the present disclosure is shown. In (a) of Fig. 5, multiple question dimensions are shown in the form of a form, firstly including a document type. The content that needs to be filled in for different document types is different. For example, for the document type selected for "Arrears", the types of arrears, litigation claims, and the like shown in the lower part of the figure are involved. Alternatively, for the document type "Contract dispute" that is not shown, a subject matter, contract provisions, and the like are also involved. Other dimensions that need to be filled in after selecting a certain document type described herein can also be referred to as question dimensions. In other words, multiple question dimensions corresponding to the target scenario can be directly determined, or may be adaptively adjusted or selected after the user makes a certain choice.

The information to be filled in the form under multiple question dimensions may be specifically filled in by input or determined by selection.

Among them, for a part that corresponds to the information to be filled in under the multiple question dimensions displayed, such part corresponds to a second field to be filled in the form, such as the document type in the form or the like. Specifically, the user selects and inputs the specified fields that should be filled in the question dimension. After the field information under these question dimensions shown in the figure is supplemented, the corresponding target question information can be generated. Specifically, a schematic diagram of the form after filling by the user is shown in (b) of Fig. 5.

In this regard, for the two different target scenarios corresponding to the above "2" and "3", according to the description above, a plurality of question dimensions corresponding to the target scenario are displayed when displaying the questioning auxiliary information matched with the target scenario, and the matching field information to be filled is displayed under the question dimensions. Specifically, the dimensions of "Opening report", "Mid-term progress report" and the like are displayed in the target scenario of the second scenario type; and the dimension "Document type" is displayed in the target scenario of the third scenario type, and based on the selection of the document type, dimensions "Arrears type", "Litigation claim" and the like are displayed. Under each dimension, the matching field information to be filled is displayed by selecting or inputting, and the target question information can be generated after filling in the field information to be filled.

(4) The target scenario belongs to a fourth scenario type. The third scenario type includes a scenario where the user actively inputs part of the question information.

Exemplarily, for the above scenarios displayed through buttons or labels, in the scope where the AI that can complete the question-and-answer process, only a small part of general or user-used scenarios are actually displayed. If the user has other needs to ask questions, they can also actively input some keywords, statements, or the like, which are used to predict or construct the question information. Correspondingly, the target auxiliary information type may be determined to include the predictive question information type.

Taking travel planning as an example, if multiple possible travel scenarios are listed similarly to the other scenarios mentioned above, as well as dimensions such as time, number of travelers, and travel expenses, etc., the user may be provided with questioning auxiliary information through the corresponding ways in the above scenarios. However, in this scenario, the time and number of travelers listed above may not be the information required when a user enquires about a travel plan, or there are no specific dimensions involved under a topic of travel, such as in addition to the time-related dimensions and travel expenses related to the itinerary listed above, there may also be users who focus on the items they are recommended to bring during the travel, or the recommended rest stops when traveling by car, etc. Therefore, in this scenario type, it is more suitable to identify the intention according to a part of the information actively inputted by the user, predict possible question information, and use it as the questioning auxiliary information for the user to select.

In other words, in a specific embodiment, the generating the questioning auxiliary information matched with the target scenario according to the target auxiliary information may be in the following way: performing intention recognition on the part of question information, and generating a plurality of pieces of predicated candidate question information, wherein selected question information in the candidate question information is used as the questioning auxiliary information.

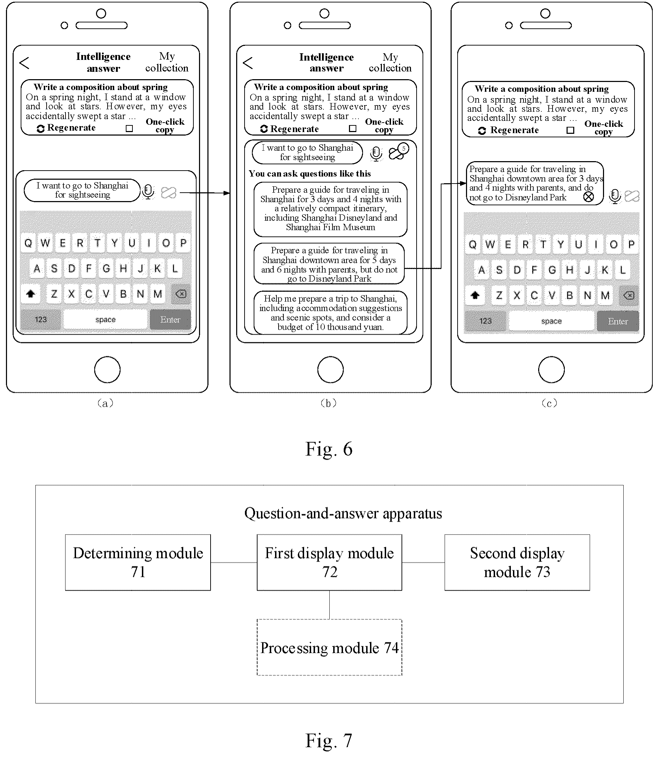

Exemplarily, as shown in Fig. 6, a schematic diagram of displaying questioning auxiliary information in a fourth scenario type provided by an embodiment of the present disclosure is shown. In (a) of Fig. 6, a user may type in a question in the input box, such as "I want to go to Shanghai for sightseeing", and next to an icon of semantic input on the right side of the input box, there is also an association button.

In response to the triggering of the association button, the page shown in (b) of Fig. 6 appears, and a plurality of pieces of extended and predicated candidate question information may be displayed on the basis of the input question information under the input box. In the upper right corner of the association button, the number of candidate question information is also displayed, such as "5". When the user does not select appropriate question information from the three pieces of candidate question information currently shown, the rest of the candidate question information that is not shown can be viewed by swiping up or down, and/or the swiping up or down operation may be regarded as an update operation, and on the basis of the questioning information inputted by the user, other relevant candidate question information is updated and displayed.

When the user selects a piece of candidate question information from (b) of Fig. 6, for example, the second candidate question information is selected, the page of (c) of Fig. 6 appears, the selected candidate question information is replaced by the information typed by the user in the text box for display, and the input keyboard is popped up accordingly, so that the questioning information selected by the user is used as the questioning auxiliary information, such that the user can obtain the target question information by directly searching or modifying it on the basis.

In this regard, in one possible case, the candidate question information displayed below changes as the information inputted by the user increases, and the change may be triggered either by receiving the new information inputted by the user or by the user actively triggering the prediction button after inputting the new information. For example, on the page shown in (b) of Fig. 6, if the user continues to enter "For 3 days and 4 nights" on the basis of typing "I want to go to Shanghai for sightseeing", then in the candidate question information displayed below, the "Prepare a guide for traveling in Shanghai downtown area for 5 days and 6 nights with parents, but do not go to Disneyland Park" shown in the figure may be updated and replaced with "Prepare a guide for traveling in Shanghai downtown area for 3 days and 4 nights with parents, and do not go to Disneyland Park".

In addition, when determining the candidate question information, in one possible case, including the situation described above where the user gradually inputs information to determine the candidate question information during this questioning, the candidate question information displayed for the user may also be specifically determined based on the historical question information that can be obtained with the authorization from the user, or by referring to the question selection information of other users under the same topic.

In the specific embodiment, it may be as follows: acquiring historical search data associated with the part of question information; performing search-link clustering on the historical search data to determine the historical search data corresponding to a same search-link, wherein the search-link includes a plurality of continuous search records, and the plurality of continuous search records include: continuous supplementary search after initiating an initial search; and generating the candidate question information corresponding to the search-link based on each historical search data of each search-link.

The above three possible examples are taken as examples. When the user gradually inputs information step by step during the questioning, for example, the user inputs "Travel in Shanghai" in the first input, supplements "3 days and 4 nights" in the second input to obtain the information of "Travel in Shanghai for 3 days and 4 nights", and supplements "With a budge of CNY 10,000" in the third input to obtain the information "Travel in Shanghai for 3 days and 4 nights with a budget of CNY 10,000". The input information can form a search link and serve as historical data under the search link. Using the information inputted above, candidate information corresponding to the search link can be generated.

In view of the historical question information that the user is authorized to obtain, this disclosure still takes "Travel in Shanghai" as an example during the questioning. If the information authorized to obtain by the user includes records related to "Shanghai" or "Tourism", such as "Shanghai Disneyland Park" or "Short-term travel", the information mentioned in these records can also be used as a continuous supplementary search after the initial search for "Travel in Shanghai", and "Travel in Shanghai", "Shanghai Disneyland Park" and "Short-term travel" may be clustered as a same search link to obtain the historical search data under the search link to generate the candidate question information corresponding to the search link, such as "Prepare a plan for a short-term travel in Shanghai, including the destination of Shanghai Disneyland Park".

For referring to question selection information under a same topic by other users, similar to the case described above where the user authorizes to obtain the historical question information, after receiving the information inputted by the user when asking the question, it can be determined to cluster into the same search link according to the question information received in the platform and selected by other users around this information. For example, if a user inputs "Travel in Shanghai" when asking a question this time, other related questions that can be obtained on the platform include "By train or by plane", "A hotel for a family of three to stay for three days", or the like. After clustering the search link, the corresponding candidate question information may also be generated similarly, such as "Make a plan for a family of three to travel to Shanghai by plan or train, and determine the specific flight or train and a hotel to accommodate a family of three in one room".

In this regard, one of the above three methods for determining candidate question information may be selected or the methods may be combined and used, which are not limited in the embodiments of the present disclosure. For the provided candidate question information, the user can select it as the questioning auxiliary information and directly use it as the target question information, or obtain the target question information after editing and modifying, which is also not limited in the embodiments of the present disclosure.

In this way, according to the above steps, the user can be presented with questioning auxiliary information that matches the target scenario.

For the S103 above, the user can also edit the displayed question auxiliary information to obtain the target question information. For example, in the scenarios corresponding to Fig. 4 and Fig. 5 above, the user can obtain the target question information by supplementing the questioning auxiliary information. Alternatively, the user can directly obtain the target question information by selecting the questioning auxiliary information. For example, for the scenario shown in Fig. 3 or Fig. 6 above, the auxiliary information can be directly used as the target question information.

When the target question information is determined, the platform can use the relevant AI technology to process the target question information to obtain the AI answer result matched with the target question information. After the AI answer result is displayed, the user can copy the AI answer result. For example, in the lower right corner of the composition about spring shown in the upper part of Fig. 2, the function of one-click copy is provided. For documents in the example above, the created and completed file may also be downloaded directly. In addition, it is possible to provide a "Regenerate" function to get other possible answers under the target question information. The details can be determined according to the actual processing situation by the artificial intelligence platform and the specific questioning needs of users, which is not described again here.

It may be appreciated by those skilled in the art that in the above-mentioned methods of the specific embodiments, the writing order of individual steps does not imply a strict order of execution, which constitutes any limitation on the implementation process, and the specific execution order of the steps shall be determined by the functions and possible internal logics thereof.

Based on the same invention conception, the embodiments of the present disclosure also provide a question-and-answer apparatus corresponding to the question-and-answer method. As the apparatus in the embodiments of the present disclosure solves questions with a working principle similar to the question-and-answer method described above in the embodiments of the present disclosure, the implementation of the apparatus can refer to the implementation of the method, and the repetition will not be described again here.

With reference to Fig. 7, which shows a schematic diagram of a question-and-answer apparatus provided by an embodiment of the present disclosure, and the apparatus includes: a determining module 71, a first display module 72, and a second display module 73.

The determining module 71 is configured to determine a target scenario for a question from a user in response to initiating the question by the user.

The first display module 72 is configured to display questioning auxiliary information matched with the target scenario, wherein an information format of the questioning auxiliary information and/or completeness of the questioning auxiliary information is related to a scenario type of the target scenario, and the questioning auxiliary information is configured to assist the user to edit target question information for questioning.

The second display module 73 is configured to display an artificial intelligence answer result matched with the target question information in response to receiving edited target question information for the questioning auxiliary information.

In an optional embodiment, when determining a target scenario for the question from the user in response to initiating a question by a user, the determining module 71 is configured to: display a plurality of candidate scenarios on an artificial intelligence answer page, and determine the target scenario for the question from the user in response to a selection operation for the candidate scenarios by the user; or receive at least part of question information inputted by the user in a question input area of the artificial intelligence answer page, and determine the target scenario matched with the at least part of question information.

In an optional embodiment, the apparatus further includes a processing module 74, the questioning auxiliary information matched with the target scenario is determined by the processing module according to the following way: determining a target auxiliary information type from a plurality of auxiliary information types based on the scenario type of the target scenario, wherein information formats corresponding to different auxiliary information types and/or information completeness corresponding to the different auxiliary information types are different; and generating the questioning auxiliary information matched with the target scenario according to the target auxiliary information type.

In an optional embodiment, when determining the target auxiliary information type from the plurality of auxiliary information types based on the scenario type of the target scenario, the processing module 74 is configured to: determine that the target auxiliary information type includes a complete question information type in response to the target scenario belonging to a first scenario type, wherein the first scenario type includes a scenario type that does not need to be supplemented with personalized information. When generating the questioning auxiliary information matched with the target scenario according to the target auxiliary information, the processing module 74 is configured to: generate editable complete question information matched with the target scenario to be used as the questioning auxiliary information based on scenario information of the target scenario.

In an optional embodiment, the determining a target auxiliary information type from a plurality of auxiliary information types by the processing module 74 based on the scenario type of the target scenario includes: in response to the target scenario belonging to a second scenario type, determining that the target auxiliary information type includes a fill-in-the-blank question information type, wherein the second scenario type includes a work-learning scenario. When generating the questioning auxiliary information matched with the target scenario according to the target auxiliary information, the processing module 74 is configured to: generate at least one statement to be filled that matches the target scenario according to the fill-in-the-blank question information type, wherein the statement to be filled includes a piece of first field information to be filled, the first field information to be filled is configured to indicate to supplement blank content in the statement to be filled, and the target question information is generated after supplementing the blank content in the statement to be filled.

In an optional embodiment, when determining the target auxiliary information type from the plurality of auxiliary information types based on the scenario type of the target scenario, the processing module 74 is configured to: in response to the target scenario belonging to a third scenario type, determine that the target auxiliary information type includes a form-based question information type, wherein the third scenario type includes a document scenario. When generating the questioning auxiliary information matched with the target scenario according to the target auxiliary information, the processing module 74 is configured to: generate a form matched with the target scenario according to the form-based question information type, wherein the form includes a plurality of pieces of second field information to be filled, the second field information to be filled is configured to indicate a selection or input of field information for a specified field, and filled form information is configured to generate the target question information in a preset format.

In a possible embodiment, when displaying questioning auxiliary information matched with the target scenario, the first display module 72 is configured to: display a plurality of question dimensions corresponding to the target scenario, and displaying matched field information to be filled under the question dimensions.

In an optional embodiment, when determining the target auxiliary information type from the plurality of auxiliary information types based on the scenario type of the target scenario, the processing module 74 is configured to: in response to the target scenario belonging to a fourth scenario type, determine that the target auxiliary information type includes a predicative question information type, wherein the fourth scenario type includes a scenario in which a user actively inputs part of question information. When generating the questioning auxiliary information matched with the target scenario according to the target auxiliary information, the processing module 74 is configured to: perform intention recognition on the part of question information, and generate a plurality of pieces of predicated candidate question information, wherein selected question information in the candidate question information is used as the questioning auxiliary information.

In an optional embodiment, the plurality of pieces of predicated candidate question information are generated by: acquiring historical search data associated with the part of question information; performing search-link clustering on the historical search data to determine the historical search data corresponding to a same search-link, wherein the search-link includes a plurality of continuous search records, and the plurality of continuous search records include: continuous supplementary search after initiating an initial search; and generating the candidate question information corresponding to the search-link based on each historical search data of each search-link.

The processing flow of each module in the apparatus and the interaction flow between individual modules are described in the method embodiments above, which are not described in detail again here.

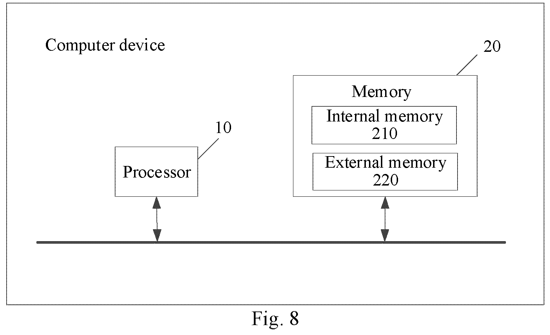

The embodiments of the present disclosure also provide a computer device, as shown in Fig. 8, which shows a schematic diagram of the structure of a computer device provided by an embodiment of the present disclosure. The computer device includes:
a processor 10 and a memory 20, wherein the memory 20 stores a machine-readable instruction that can be executed by the processor 10, the processor 10 is configured to execute the machine-readable instruction stored in the memory 20, and when the machine-readable instruction is executed by the processor 10, the processor 10 performs the following steps:
in response to initiating a question by a user, determining a target scenario for the question from the user; displaying questioning auxiliary information matched with the target scenario, wherein an information format of the questioning auxiliary information and/or completeness of the questioning auxiliary information is related to a scenario type of the target scenario, and the questioning auxiliary information is configured to assist the user to edit target question information for questioning; and in response to receiving edited target question information for the questioning auxiliary information, displaying an artificial intelligence answer result matched with the target question information.

The memory 20 includes an internal memory 210 and an external memory 220. The internal memory 210 herein is also called an internal storage, which is used for temporarily storing computing data in the processor 10 and data exchanged with the external memory 220 such as a hard disk. The processor 10 exchanges data with the external memory 220 through the internal memory 210.

The specific implementation process of the above instruction is described in the steps of the question-and-answer method described in the embodiments of the present disclosure, which is not described again here.

The embodiments of the present disclosure also provide a computer-readable storage medium on which a computer program is stored, and the computer program, when being run by a processor, performs the steps of the question-and-answer method described in the method embodiments above. The storage medium may be a volatile or non-volatile computer-readable storage media.

The embodiments of the present disclosure also provide a computer program product carrying a program code, and the program code includes an instruction that can be used to perform the steps of the question-and-answer method described in the method embodiments above, which may be referred specifically to the method embodiments above and are not described again herein.

The above-mentioned computer program product can be implemented by means of hardware, software, or a combination thereof. In one optional embodiment, the computer program product is specifically embodied as a computer storage medium, and in another optional embodiment, the computer program product is embodied in a software product, such as a software development kit (SDK) and the like.

It may be apparent to those skilled in the art that, for convenient and simplified description, corresponding processes in the method embodiments above may be referred to for the specific working processes of the system and apparatus described above, which are not described again herein. In several embodiments provided in the present disclosure, it should be understood that the disclosed system, apparatus and method may be implemented by other means. The apparatus embodiments described above are only schematic. In an example, the division of the units is only a logical function division, and they may be divided by other means in the actual implementation. In another example, a plurality of units or components can be combined or can be integrated into another system, or some features can be ignored, or not implemented. On the other hand, the coupling or direct coupling or communication connection between each other shown or discussed may be an electrical, mechanical, or other indirect coupling or communication connection through a communication interface, apparatus or unit.

The unit described as a separated part may be or may not be physically separated, and a part displayed as a unit may be or may not be a physical unit, that is, may be located in a place, or may also be distributed in a plurality of network units. Some or all of these units may be selected according to actual needs to realize the purpose of the present embodiment.

In addition, each functional unit in each embodiment of the present disclosure may be integrated in a processing unit, or each unit may exist separately and physically, or two or more units may be integrated in a single unit.

The described function, if implemented in the form of a software functional unit and marketed or used as a stand-alone product, may be stored in a non-volatile computer-readable storage medium executable by a processor. Based on this understanding, the technical solution of the present disclosure in essence or the part that contributes to the prior art or the part of the technical solution may be embodied in the form of a software product stored in a storage medium that includes instructions for enabling a computer device (which may be a personal computer, a server, a network device, or the like) to perform all or part of the steps of the method described in each embodiment of the present disclosure. The storage medium above includes: a USB flash drive, a portable hard disk, a read-only memory (ROM), a random access memory (RAM), a magnetic disc or an optical disc, or another medium that can store a program code.

Finally, it should be noted that: the above embodiments are only the specific embodiment of the present disclosure used to illustrate but not limit the technical solutions of the present disclosure. The scope of the present disclosure is not limited thereto. Although the present disclosure has been described in detail with reference to the foregoing embodiments, those of ordinary skill in the art should understand that anyone skilled in the art may easily modify or change the technical solutions described in the foregoing embodiments, or replace equivalently some technical features thereof within the technical scope of the present disclosure, without making the essence of the corresponding technical solutions depart from the spirit and scope of the technical solutions of the embodiments of the present disclosure, which should all been covered in the protection scope of the present disclosure. Therefore, the protection scope of the present disclosure shall be defined only by the claims.

## Claims

1. A method for question-and-answer, comprising:
in response to initiating a question by a user, determining a target scenario for the question from the user;
displaying questioning auxiliary information matched with the target scenario, wherein an information format of the questioning auxiliary information and/or completeness of the questioning auxiliary information is related to a scenario type of the target scenario, and the questioning auxiliary information is configured to assist the user to edit target question information for questioning; and
in response to receiving edited target question information for the questioning auxiliary information, displaying an artificial intelligence answer result matched with the target question information.

2. The method according to claim 1, wherein the in response to initiating a question by a user, determining a target scenario for the question from the user, comprises:
displaying a plurality of candidate scenarios on an artificial intelligence answer page, and determining the target scenario for the question from the user in response to a selection operation for the candidate scenarios by the user; or
receiving at least part of question information inputted by the user in a question input area of the artificial intelligence answer page, and determining the target scenario matched with the at least part of question information.

3. The method according to claim 1 or 2, wherein the questioning auxiliary information matched with the target scenario is determined by:
determining a target auxiliary information type from a plurality of auxiliary information types based on the scenario type of the target scenario, wherein information formats corresponding to different auxiliary information types and/or information completeness corresponding to the different auxiliary information types are different; and
generating the questioning auxiliary information matched with the target scenario according to the target auxiliary information type.

4. The method according to claim 3, wherein
the determining a target auxiliary information type from a plurality of auxiliary information types based on the scenario type of the target scenario, comprises:
in response to the target scenario belonging to a first scenario type, determining that the target auxiliary information type comprises a complete question information type, wherein the first scenario type comprises a scenario type that does not need to be supplemented with personalized information; and
the generating the questioning auxiliary information matched with the target scenario according to the target auxiliary information comprises:
based on scenario information of the target scenario, generating editable complete question information matched with the target scenario to be used as the questioning auxiliary information.

5. The method according to claim 3, wherein
the determining a target auxiliary information type from a plurality of auxiliary information types based on the scenario type of the target scenario, comprises:
in response to the target scenario belonging to a second scenario type, determining that the target auxiliary information type comprises a fill-in-the-blank question information type, wherein the second scenario type comprises a work-learning scenario; and
the generating the questioning auxiliary information matched with the target scenario according to the target auxiliary information, comprises:
generating at least one statement to be filled that matches the target scenario according to the fill-in-the-blank question information type, wherein the statement to be filled comprises a piece of first field information to be filled, the first field information to be filled is configured to indicate to supplement blank content in the statement to be filled, and the target question information is generated after supplementing the blank content in the statement to be filled.

6. The method according to claim 3, wherein
the determining a target auxiliary information type from a plurality of auxiliary information types based on the scenario type of the target scenario, comprises:
in response to the target scenario belonging to a third scenario type, determining that the target auxiliary information type comprises a form-based question information type, wherein the third scenario type comprises a document scenario; and
the generating the questioning auxiliary information matched with the target scenario according to the target auxiliary information, comprises:
generating a form matched with the target scenario according to the form-based question information type, wherein the form comprises a plurality of pieces of second field information to be filled, the second field information to be filled is configured to indicate a selection or input of field information for a specified field, and filled form information is configured to generate the target question information in a preset format.

7. The method according to claim 5 or 6, wherein the displaying questioning auxiliary information matched with the target scenario, comprises:
displaying a plurality of question dimensions corresponding to the target scenario, and displaying matched field information to be filled under the question dimensions.

8. The method according to any one of claims 3 to 7, wherein
the determining a target auxiliary information type from a plurality of auxiliary information types based on the scenario type of the target scenario, comprises:
in response to the target scenario belonging to a fourth scenario type, determining that the target auxiliary information type comprises a predicative question information type, wherein the fourth scenario type comprises a scenario in which a user actively inputs part of question information; and
the generating the questioning auxiliary information matched with the target scenario according to the target auxiliary information, comprises:
performing intention recognition on the part of question information, and generating a plurality of pieces of predicated candidate question information, wherein selected question information in the candidate question information is used as the questioning auxiliary information.

9. The method according to claim 8, wherein the plurality of pieces of predicated candidate question information are generated by:
acquiring historical search data associated with the part of question information;
performing search-link clustering on the historical search data to determine the historical search data corresponding to a same search-link, wherein the search-link comprises a plurality of continuous search records, and the plurality of continuous search records comprise: continuous supplementary search after initiating an initial search; and
generating the candidate question information corresponding to the search-link based on each historical search data of each search-link.

10. A question-and-answer apparatus, comprising:
a determining module, configured to determine a target scenario for a question from a user in response to initiating the question by the user;
a first display module, configured to display questioning auxiliary information matched with the target scenario, wherein an information format of the questioning auxiliary information and/or completeness of the questioning auxiliary information is related to a scenario type of the target scenario, and the questioning auxiliary information is configured to assist the user to edit target question information for questioning; and
a second display module, configured to display an artificial intelligence answer result matched with the target question information in response to receiving edited target question information for the questioning auxiliary information.

11. A computer device, comprising: a processor and a memory, wherein the memory stores a machine-readable instruction executable by the processor, the processor is configured to execute the machine-readable instruction stored in the memory, and when the machine-readable instruction is executed by the processor, the processor performs steps of the method for question-and-answer according to any one of claims 1 to 9.

12. A computer-readable storage medium storing a computer program, wherein when the computer program is executed by a computer device, the computer device executes steps of the method for question-and-answer according to any one of claims 1 to 9.
